**Europäisches Patentamt**

**European Patent Office**

**Office européen des brevets**

(11) Numéro de publication: **0 143 058**
A2

## (12) DEMANDE DE BREVET EUROPEEN

(21) Numéro de dépôt: **84402386.1**

(22) Date de dépôt: **22.11.84**

(51) Int. Cl.⁴: **F 16 K 11/065**
**F 16 K 31/44**

(30) Priorité: **23.11.83 ES 275897 U**

(43) Date de publication de la demande:
**29.05.85 Bulletin 85/22**

(84) Etats contractants désignés:
**AT BE CH DE FR GB IT LI LU NL SE**

(71) Demandeur: **Catany Rigo, Bernardo**
**Marqués de Sotelo 5**
**Valence(ES)**

(72) Inventeur: **Catany Rigo, Bernardo**
**Marqués de Sotelo 5**
**Valence(ES)**

(74) Mandataire: **Bressand, Georges et al,**
**c/o CABINET LAVOIX 2 Place d'Estienne d'Orves**
**F-75441 Paris Cedex 09(FR)**

(54) **Valve de mélange perfectionnée.**

(57) Valve de mélange perfectionnée, caractérisée en ce qu'elle comporte une tige de commande (1) qui se termine, à son extrémité opposée à celle qui est fixée à un levier de commande, par une partie semi-cylindrique (1a) de grandes dimensions, disposée coaxialement à l'ensemble de la tige, ce qui assure une plus longue durée de vie au mécanisme.

FIG.1

Valve de mélange perfectionnée.-

La présente invention a pour objet une valve de mélange perfectionnée.

Une infinité de valves de mélange ayant des applications sanitaires est apparue depuis longtemps sur le marché, et toutes ces valves sont basées sur le principe d'au moins deux plaques ou disques céramiques superposés ayant un degré élevé d'égalité de surfaces et de polissage de leurs faces en contact, qui produisent une étanchéité entre les ouvertures ou orifices de passage agencés dans ces pièces.

On distingue deux groupes de réalisation, où les disques sont disposés perpendiculairement à l'axe de la valve, en fonction de la position des disques céramiques par rapport à l'axe de la valve, soit perpendiculaire, soit parallèle à celui-ci, différents problèmes étant rencontrés, à savoir :

a) faible angle de rotation de l'organe de commande pour sélectionner le rapport de mélange, ce qui entraîne une opération de sélection de températures difficile et relativement peu précise;

b) faible débit, ce qui oblige le fabricant à réaliser plusieurs tailles de mélangeurs, même si ceux-ci ne sont destinés qu'à des applications domestiques, ou autrement on n'obtient qu'un faible débit, par exemple pour des bains;

c) raideur ou difficulté pour faire fonctionner l'organe de commande lorsqu'il est déplacé dans la direction de régulation du rapport de mélange;

d) vieillissement prématuré des parties mobiles en raison de deux facteurs : rigidité du fonctionnement et faible surface d'usure des parties en frottement.

La présente invention vise le type de réali-

2

sation dans laquelle le groupe des disques est disposé perpendiculairement à l'axe de la valve, et son but essentiel est de résoudre d'une manière satisfaisante les problèmes généraux ci-dessus.

Suivant l'invention, la valve de mélange perfectionnée est caractérisée en ce que sa tige d'entraînement se termine, à l'extrémité opposée à celle de sa fixation au levier de commande, par une partie semi-cylindrique de grandes dimensions disposée coaxialement à l'ensemble de la tige, ce qui procure une durée de vie plus grande au mécanisme.

D'autres particularités et avantages de l'invention apparaîtront au cours de la description qui va suivre, faite en référence aux dessins annexés qui en illustrent une forme de réalisation à titre d'exemple non limitatif :

- les Figures 1 et 2 sont des vues en coupe transversale du mélangeur dans deux positions angulaires différentes du levier de commande;

- la Figure 3 est une vue montrant d'une part la tige de commande en perspective et d'autre part une coupe transversale de la valve de la Figure 1 suivant la ligne C-C';

- la Figure 4 est une vue en coupe transversale de la valve de la Figure 1;

- la Figure 5 est une vue en coupe transversale suivant A-A' de la Figure 1;

- les Figures 6, 7, 8 sont des vues en coupe respectivement suivant B-B' de la Figure 2, D-D' de la Figure 2 et E-E' de la Figure 4.

Le mélangeur représenté aux dessins comporte une tige 1 à l'extrémité supérieure de laquelle est fixé un levier de commande. La tige 1 peut basculer sur un axe 2 et adopter la position visible à la Fi-

0143058

3

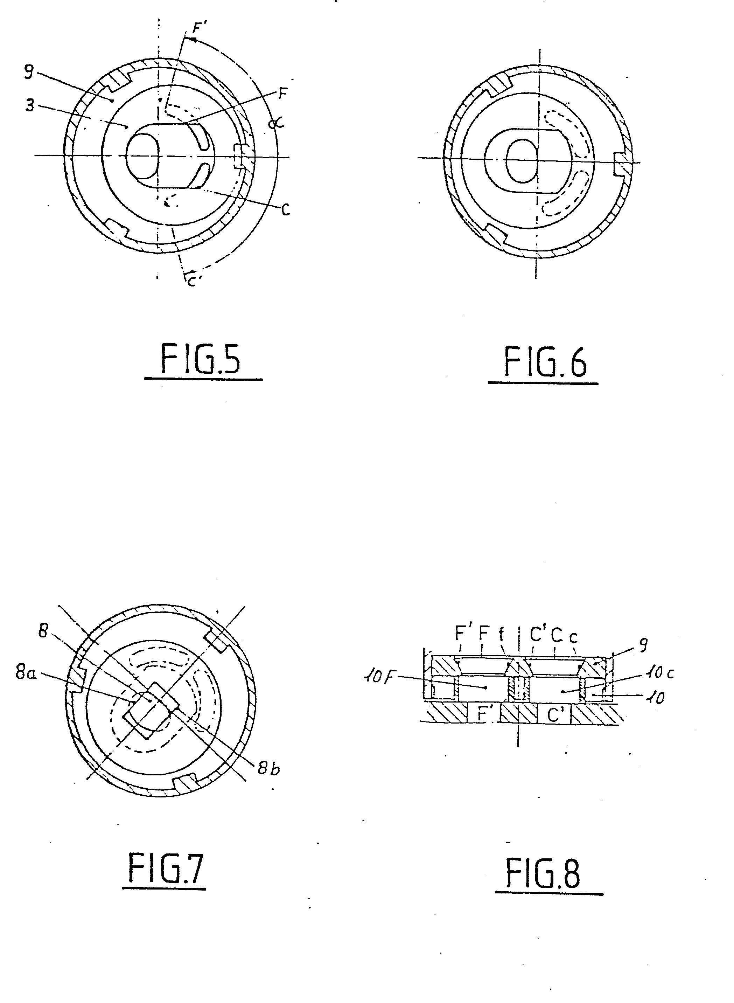

gure 2. Ce basculement sert à obtenir une régulation du débit par déplacement d'un disque céramique mobile 3, suivant un trajet rectiligne qui reste toujours perpendiculaire à l'axe 2 de basculement, comme on le voit dans les coupes A-A' et B-B' (Figures 5 et 6).

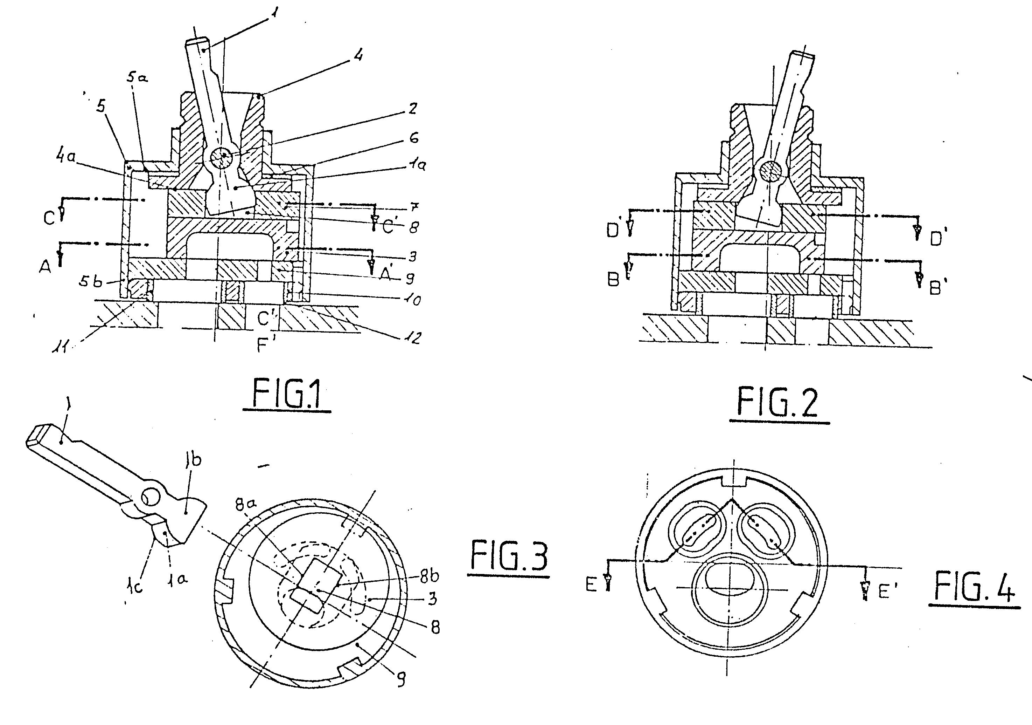

La perpendicularité de ce déplacement permet aux ouvertures ou orifices F et C d'eau chaude et d'eau froide d'être réalisés avec leurs faces opposées F' et C' formant un angle relativement grand, qui augmente l'angle de rotation du levier de commande, et permet ainsi d'obtenir une plus grande sensibilité et une meilleure précision dans la sélection de la température. En outre, du fait que cet angle est plus grand, la section libre de chacune des ouvertures F et C s'accroît également, et par conséquent, le débit obtenu est supérieur, ce qui permet d'alimenter un bain avec un débit suffisant au moyen d'une taille unique de mélangeur. La perpendicularité du trajet de la plaque mobile par rapport à l'axe 2 est permise par les parois latérales 8a, 8b de la fente 8, qui servent de guides pour la partie d'entraînement 7, ces parois latérales étant ajustées aux bases plates 1b et 1c de l'extrémité semi-cylindrique 1a de la tige 1 (voir Figure 3 et coupe C-C').

Contrairement aux réalisations connues, l'extrémité 1a de la tige 1 ne se termine pas par un nez excentrique et généralement petit, dont la fonction n'est que de déplacer la plaque mobile, en entraînant une usure importante en raison de sa petite taille. En effet, la tige 1 selon l'invention se termine par une partie semi-cylindrique 1a coaxiale à la tige 1 elle-même, et les bases plates parallèles 1b, 1c de cette partie semi-cylindrique 1a servent de guide à la plaque mobile 3, par engagement comme déjà

4

indiqué, avec les faces 8a, 8b de la fente 8 de la partie d'entraînement 7. De plus, cette disposition coaxiale permet de réaliser l'extrémité .1a avec de grandes dimensions, ce qui a pour résultat une usure plus faible de celle-ci et de son logement.

La grande taille des orifices d'entrée F et C, obtenue par accroissement de l'angle précité, crée un problème pour relier ces orifices et les orifices d'entrée F' et C' de la valve, qui sont habituellement ronds. Ce problème a été résolu de deux façons :

Tout d'abord, les faces latérales F'-f et C'-c ne traversent pas la plaque fixe 9 perpendiculairement, mais avec une inclinaison, ce qui réduit sensiblement la section de celles-ci, comme visible à la Figure 4. De plus, entre le plaque fixe 9 et la base de la valve, est ménagée une partie de transition 10 qui présente des orifices traversants respectifs 10F et 10C, dont la section est également visible à la Figure 4 et qui permettent une liaison entre les orifices circulaires de la base et ceux provenant de la face inférieure du disque fixe 9.

Le support 4 peut tourner autour de son axe, et cette rotation entraîne la rotation de la plaque mobile 3, l'axe de rotation étant toujours l'axe effectif du support 4, indépendamment de la position de la tige 1, ce qui permet de faire varier le rapport de mélange. Il résulte de ce qui précède qu'une variation du rapport de mélange est obtenue par rotation de la plaque mobile autour d'un centre situé sur l'axe de la tige et indépendant de la position relative de la tige 1.

L'étanchéité entre la base du corps et la plaque fixe 9 est obtenue au moyen de joints en caoutchouc 11, 12 qui travaillent sous compression et sont guidés extérieurement par la partie de transition 10. Cet effort en compression est transmis à toutes les parties mobiles, ce qui a pour résultat un accroissement de la rigidité du fonctionnement et de l'usure du mécanisme. Pour réduire ce défaut, la présente invention prévoit une rondelle 6 en une matière antifriction, qui frotte contre la face intérieure 5a du boîtier 5 et contre l'anneau 4a de la partie 4, ce qui facilite la rotation du dispositif et accroît en même temps la vie de celui-ci.

Sur sa base inférieure, le boîtier 5 comporte au moins trois parties saillantes élastiques 5b, dont la fonction est de retenir la partie de transition 10, le rôle de cette dernière étant de retenir toutes les parties intérieures de la valve. Il en résulte que toutes les parties forment un assemblage compact facile à manipuler; par ailleurs, en exerçant une légère pression, on peut enlever la partie de transition 10 et avec celle-ci, toutes les pièces restantes, pour permettre une inspection ou un remplacement éventuel d'une pièce sans devoir démonter la totalité de celles-ci.

La structure qui fait l'objet de l'invention peut comporter des variantes d'exécution, notamment en ce qui concerne les matériaux, dimensions et formes des pièces utilisées, dans le cadre des revendications annexées.

6

## REVENDICATIONS

1 - Valve de mélange perfectionnée, caractérisée en ce qu'elle comporte une tige de commande (1) qui se termine, à son extrémité opposée à celle qui est fixée à un levier de commande, par une partie semi-cylindrique (1a) de grandes dimensions, disposée coaxialement à l'ensemble de la tige, ce qui assure une plus longue durée de vie au mécanisme.

2 - Valve selon la revendication 1, caractérisée en ce qu'elle comporte une plaque mobile (3) qui peut être déplacée suivant deux mouvements, dont l'un est un trajet rectiligne dont le but est de régler le débit, et dont l'autre mouvement est circulaire, le centre de celui-ci étant situé sur l'axe de la valve et étant indépendant de la position relative de la tige (1), le rôle de ce mouvement circulaire étant de faire varier le rapport de mélange, c'est-à-dire la température du mélange.

3 - Valve de mélange selon l'une des revendications 1 et 2, caractérisée en ce que la partie semi-cylindrique (1a) présente des bases parallèles (1b, 1c) qui coopèrent avec les faces parallèles (8a, 8b) d'une fente (8), ce qui assure à la plaque mobile (3) un guidage nécessaire pour son mouvement rectiligne.

4 - Valve selon l'une des revendications 1 à 3, caractérisée en ce que les faces opposées des ouvertures (F'-f) et (C'-c) sont obliques, ce qui permet de développer un angle plus grand sur la face d'étanchéité et une angle plus petit sur la face opposée, afin d'obtenir un angle de rotation plus grand pour le levier de commande et une plus grande sensibilité.

5 - Valve selon l'une des revendications 1 à 4, caractérisée en ce qu'elle comprend une partie de transition (10) située entre la plaque fixe et la base d'appui de la valve, qui comprend des joints d'étanchéité (11) reçus de manière coulissante dans des ouvertures respectives (10F) et (10C).

6 - Valve selon l'une des revendications 1 à 5, caractérisée en ce que la partie de transition (10) est retenue amoviblement par au moins trois parties saillantes élastiques du boîtier (5), afin de permettre une inspection ou le changement d'une pièce intérieure sans devoir démonter l'ensemble de la valve, ce qui facilite la manipulation de celle-ci lorsqu'elle forme un assemblage unique, c'est-à-dire lorsque la partie de transition (10) est retenue.

7 - Valve selon l'une des revendications 1 et 6, caractérisée en ce qu'elle comprend une rondelle (6) en matière anti-friction, qui facilite le fonctionnement et réduit l'usure.

0143058

FIG.4

FIG.2

FIG.3

FIG1

## FIG.5

## FIG.6

## FIG.7

## FIG.8